# EUROPEAN PATENT SPECIFICATION

(11) **EP 3 792 311 B1**
(45) Date of publication and mention of the grant of the patent: **04.12.2024**
(21) Application number: 19830772.0
(22) Date of filing: 29.06.2019
(51) Int. Cl.: C08L 63/00, C08K 7/06, C08J 5/04, B29C 70/06, E01D 19/16, B29C 53/58, B29C 70/50, B29C 70/52, E01D 19/14

(54) **PREPARATION METHOD FOR A HIGH-STRENGTH CARBON FIBER COMPOSITE BAR MATERIAL WITH RESIN RIB ON SURFACE**
VERFAHREN ZUR HERSTELLUNG EINES HOCHFESTEN KOHLEFASERVERBUNDLEISTENMATERIALS MIT HARZRIPPE AUF DER OBERFLÄCHE
PROCÉDÉ DE PRÉPARATION D'UN MATÉRIAU DE BARRE COMPOSITE EN FIBRES DE CARBONE À RÉSISTANCE ÉLEVÉE DOTÉ D'UNE NERVURE EN RÉSINE SUR LA SURFACE

(30) Priority: 04.07.2018 CN 201810725391
(43) Date of publication of application: 17.03.2021
(73) Proprietor: Fasten Hongsheng Group Co., Ltd., Jiangyin, Jiangsu 214433 (CN)
(72) Inventor: LIU, Lihua, jiangyin, Jiangsu 214433 (CN); ZHU, Yuanlin, jiangyin, Jiangsu 214433 (CN); ZHU, Weijun, jiangyin, Jiangsu 214433 (CN); ZHOU, Jiaqi, jiangyin, Jiangsu 214433 (CN); HUANG, Shengbin, jiangyin, Jiangsu 214433 (CN)
(74) Representative: Huang, Liwei
(86) International application number: PCT/CN2019/093940
(87) International publication number: WO 2020/007252

(56) References cited:
- EP-A1- 0 667 228
- CN-A- 102 041 870
- CN-A- 103 225 369
- CN-A- 108 625 794
- CN-A- 109 054 296
- CN-C- 100 424 304
- JP-A- H0 333 045
- JP-A- H07 156 280
- US-A1- 2013 224 470

## Description

### Technical field

The invention belongs to the technical field of building materials, mainly relating a preparation method of a high-strength carbon fiber composite bar with resin ribs on the surface.

### Background art

The carbon fiber composite bar has the advantages of light weight, high strength, corrosion resistance, fatigue resistance, and sound shock absorption, and it is used as a cable component in bridge cables, which has become a development direction to improve bridge span and durability. However, a plain round carbon fiber composite bar is difficult to anchor, which represents a key factor that restricts a wide application of bars application currently. At present, three carbon fiber composite bars with ribs on the surface are developed at home and abroad, and are used to increase the mechanical interaction between a bar surface and an anchoring material, thus to improve the anchoring efficiency of the bar.

A first method is as follows: producing a plaint round carbon fiber composite bar through a pultrusion process, preparing fiber bundles and dipping them in epoxy resin and then winding the surface of the plaint round carbon fiber composite bar with the fiber bundle dipping in epoxy resin, and curing the epoxy resin and making it bonding on the plaint round carbon fiber composite bar to ribs. The fiber bundle of the ribbed bar produced by this method has a low bonding strength to the plain round bar and it is prone to debond, so the tensile property of the carbon fiber composite bar is not fully exerted.

A second method is as follows: winding a F4 belt around an uncured preformed bar impregnated with epoxy resin, and then pulling it into a forming mold for curing; after curing, unwinding the F4 belt to form a spiral groove on the bar surface. This method has two problems: the first, due to winding of the F4 belt, the internal continuous carbon fiber bundles fluctuate in a lengthwise direction of the bar, resulting in a substantial decrease in tensile strength and elastic modulus of the bar; the second, after the F4 belt is wound, the bar surface becomes uneven and a large friction force is produced when it is pulled into the forming mold for curing, which may cause mold blocking. Subjected to an experimental test, the bar produced by the method has the a tensile strength of about 2400MPa, and a tensile modulus of about 150GPa. CN 100424304C discloses a prior art similar to the second method. JP H03 33045A also dicloses spirally winding a tough wire shaped body and a heat resistant tape on the surface of a wire-shaped fiber base mateiral. JP H07 156280A discloses winding a flat tape having resin impregnating properties and stretchability on fiber bundles impregnated with uncured resin and shaping it. A third method is to form a threaded structure on the bar surface of the bar through a mechanical method. This method cuts off the carbon fiber bundles on the bar surface, which may affect the tensile strength and stiffness of the bar, thereby wasting material to some extent.

### Detailed descriptions of the invention

The present invention designs a preparation method for a high-strength carbon fiber composite bar with resin ribs on the surface, wherein the preparation method has the advantages of one-time forming, simple process and it can avoids mold blocking; the high-strength carbon fiber composite bar with epoxy resin ribs on the surface produced has continuous spiral epoxy resin ribs on the surface and has the characteristics of easy anchoring, high strength and high modulus.

The invention is set out in the appended set of claims.

A high-strength carbon fiber composite bar with resin ribs on the surface, comprising a carbon fiber and an epoxy resin matrix, wherein continuous spiral epoxy resin ribs are arranged on the surface of the bar, the thickness of the resin ribs is within 0.2mm-0.4mm, the width of the resin ribs is within 5mm-7mm, and the pitch of the resin rib is within 2mm-4mm.

A preparation method of the high-strength carbon fiber composite bar with resin ribs on the surface is described as follows:
Step 1. Introducing a plurality of carbon fiber bundles from a creel, adjusting the number of carbon fiber bundles as needed according to the diameter of the bars produced, based on the number of carbon fiber bundles, controlling adjustment of a fiber volume content in a range of 70%-78% and adjustment of a speed within a range of 300mm/min-600mm/min, controlling the tension of a cable with a tension controller, and taking a tension adjustment range of 5.88N-9.80N so as to ensure that the orientation of the carbon fiber bundles remains straight during immersion.
Step 2. Pulling the carbon fiber bundle into an epoxy resin tank to impregnate the epoxy resin, entering the preformed mold (after getting out of the epoxy resin tank), extruding the excess epoxy resin to obtain a bar blank with a predetermined size while ensuring the inner diameter of the preformed mold is adjusted within the range of 2mm-10mm, the epoxy resin is made of a resin matrix, a curing agent and a catalyst, with a mass ratio of 1000:860:13.6;
Step 3. When pulling the bar blank forward, winding a nylon tapes on the bar blank while keeping the winding distance of the nylon belt within 5mm-7mm, controlling the winding tension to ensure that the nylon belt is only attached to the surface of the bar blank and the bar blank is not tightened, the orientation of the carbon fiber bundle on the surface of the bar blank remains straight without fluctuation, the width of the nylon belt is 2mm-4mm, and the thickness thereof is 0.5mm-1mm;
Step 4. Pulling the bar blank with a nylon belt on the surface through 5 ovens successively, with the temperature of the 5 ovens set to 150°C, 150°C, 160°C, 180°C, 180°C; after being heated by the first oven, the epoxy resin inside the bar blank expands when heated and keeps a good fluidity, starts to overflow from the inside of the bar blank and gradually fills up the gap between the nylon tapes; after the second oven, the epoxy resin gels; after the third oven, the epoxy resin is pre-cured, after the last two ovens, it completes the post-curing process, and the thickness of the resin rib is affected by the preheating time which is controlled by controlling a length of the first oven.
Step 5. After the curing is completed, unwinding the nylon tapes on the surface of the bar, then a spiral resin rib is formed by the epoxy resin in the gap of the nylon tapes, and a spiral groove is formed at the unwinding part of the nylon tapes.
Step 6: Winding the resin bars produced on a take-up machine after being pulled by a puller.

Compared with the prior art, the invention has the advantages that:
1. The bar surface has continuous spiral epoxy resin ribs, the epoxy resin ribs and the epoxy resin matrix in the bar are integrally formed, and there is a high bonding strength between the two, so it is not prone to debonding. After being anchored by an epoxy resin bonding anchor system, an epoxy resin anchoring material and the epoxy resin rib on the bar surface form a mechanical interaction, which greatly improves the anchoring effect.
2. During the forming process, the nylon belt winding of the present application does not squeeze the carbon fiber bundle, and due to tension of the carbon fiber bundle, the carbon fiber bundle remains straight along the lengthwise direction of the bar. Different from a previous production process which uses the nylon belt to wind the bar to form a tightened sign, this invention solves the defects of the compression of the nylon belt against the surface carbon fiber and the damage on the flatness of the carbon fiber. Therefore, the bar manufactured by the method of the present invention has the characteristics of high strength and high modulus. Subjected to an experimental test, the bar produced by the method of the present invention can have a tensile strength of about 3300 MPa, and a tensile modulus of about 170 GPa.
3. The method of the present invention has the characteristics of integral molding and simple process.

### Description of the Drawings

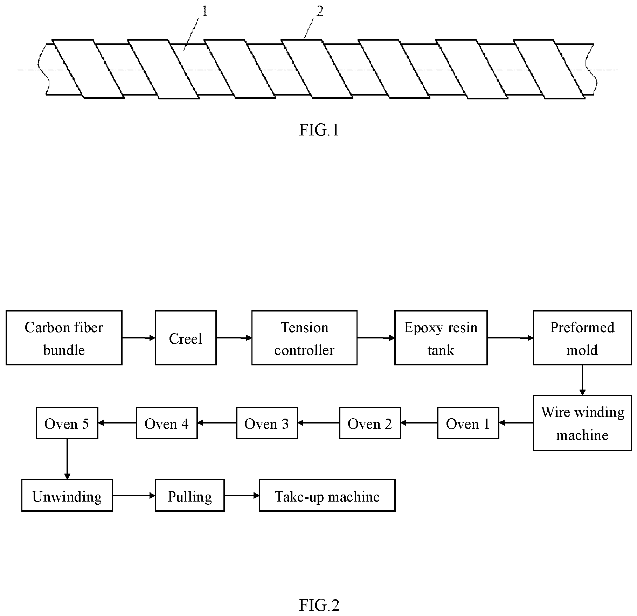

FIG.1 depicts a structural diagram of a high-strength carbon fiber composite bar with resin ribs on the surface of the present invention.
FIG.2 depicts a process flow diagram of a preparation method of the high-strength carbon fiber composite bar with resin ribs on the surface of the present invention
Wherein,
1- Carbon fiber composite bar, 2- Resin rib.

### Detailed description of embodiments

In combination with the attached drawings and embodiments, the present invention is further described in details.

The technical solutions of the embodiments described below with reference to the drawings are clearly and completely described, obviously, the embodiments illustrated only constitute a part of the embodiments of the present invention, but not covering all.

### Embodiment I

A high-strength carbon fiber composite bar with resin ribs on the surface, comprising a carbon fiber and an epoxy resin matrix, wherein the bar diameter is 7mm, the bar surface has continuous spiral epoxy resin ribs, the thickness of the resin rib is 0.25mm, and the pitch of the resin rib is 2.4 mm.

A method for preparing high-strength carbon fiber composite bar with resin ribs on the surface comprises the following steps:
Step 1. Introducing 62 carbon fiber bundles from a creel at a speed of 350mm/min, controlling the cable tension at 6.88N with a tension controller;
Step 2. Pulling the carbon fiber bundle into an epoxy resin tank to impregnate the epoxy resin, entering the preformed mold (after getting out of the epoxy resin tank), extruding the excess epoxy resin to obtain a bar blank with an inner diameter of 7mm while ensuring the inner diameter of the preformed mold is 7mm, the fiber volume content of the bar blank is 72%, the epoxy resin is made of a resin matrix, a curing agent and a catalyst, with a mass ratio of 1000:860:13.6;
Step 3: When pulling the bar forward, winding a nylon belt on the bar blank while keeping the winding distance of the nylon belt at 6.3mm, controlling the winding tension to ensure that the nylon belt is only attached to the surface of the bar blank and the bar blank is not tightened, the orientation of the carbon fiber bundle on the surface of the bar blank remains straight, carbon fiber bundle is not stressed by the nylon belt, without fluctuation, the width of the nylon belt is 2.5mm, and the thickness thereof is 0.7mm;
Step 4. Pulling the bar blank with a nylon belt on the surface through 5 ovens successively at a speed of 250-600mm/min, with the temperature of the 5 ovens set to 150°C, 150°C, 160°C, 180°C, 180°C; after being heated by the first oven, the epoxy resin inside the bar blank expands when heated and keeps a good fluidity, starts to overflow from the inside of the bar blank and gradually fills up the gap between the nylon tapes; after the second oven, the epoxy resin gels; after the third oven, the epoxy resin is pre-cured, after the last two ovens, it completes the post-curing process, and the thickness of the resin rib is affected by the preheating time which is controlled by controlling a length of the first oven; the length of the first oven of the present application is set as 3-7m, and the oven supports heating in stages, thus to adjust the actual length of the oven.
Step 5. After the curing is completed, unwinding the nylon tapes on the surface of the bar, then a spiral resin rib is formed by the epoxy resin in the gap of the nylon taps, and a spiral groove is formed at the unwinding part of the nylon tapes.
Step 6. Winding the resin bars produced on a take-up machine after being pulled by a puller; the tensile strength and tensile modulus of the resin bars are respectively 3436MPa and 171GPa.

### Embodiment II

A high-strength carbon fiber composite bar with resin ribs on the surface, comprising a carbon fiber and an epoxy resin matrix, wherein the bar diameter is 5mm, the bar surface has continuous spiral epoxy resin ribs, the thickness of the resin rib is 0.2mm, and the pitch of the resin rib is 2mm.

A method for preparing high-strength carbon fiber composite bar with resin ribs on the surface comprises the following steps:
Step 1. Introducing 32 carbon fiber bundles from a creel at a speed of 450mm/min, controlling the cable tension at 6.2N with a tension controller;
Step 2. Pulling the carbon fiber bundle into an epoxy resin tank to impregnate the epoxy resin, entering the preformed mold (after getting out of the epoxy resin tank), extruding the excess epoxy resin to obtain a bar blank with a 5mm diameter while ensuring the inner diameter of the preformed mold is 5mm, the fiber volume content of the bar blank is 75%, the epoxy resin is made of a resin matrix, a curing agent and a catalyst, with a mass ratio of 1000:860: 13.6;
Step 3. When pulling the bar forward, winding a nylon belt on the bar blank while keeping the winding distance of the nylon belt at 5.2mm, controlling the winding tension to ensure that the nylon belt is only attached to the surface of the bar blank and the bar blank is not tightened, the orientation of the carbon fiber bundle on the surface of the bar blank remains straight without fluctuation, the width of the nylon belt is 2mm, and the thickness thereof is 0.5mm;
Step 4. Pulling the bar blank with a nylon belt on the surface through 5 ovens successively at a speed of 400mm/min, with the temperature of the 5 ovens set to 150°C, 150°C, 160°C, 180°C, 180°C; after being heated by the first oven, the epoxy resin inside the bar blank expands when heated and keeps a good fluidity, starts to overflow from the inside of the bar blank and gradually fills up the gap between the nylon tapes; after the second oven, the epoxy resin gels; after the third oven, the epoxy resin is pre-cured, after the last two ovens, it completes the post-curing process, the length of the first oven described in the embodiment is 4mm.
Step 5. After the curing is completed, unwinding the nylon tapes on the surface of the bar, then a spiral resin rib is formed by the epoxy resin in the gap of the nylon taps, and a spiral groove is formed at the unwinding part of the nylon tapes.
Step 6. Winding the resin bars produced on a take-up machine after being pulled by a puller; the tensile strength and tensile modulus of the resin bars are respectively 3560MPa and 174GPa.

The curing agent of the present application is selected from menthane diamine (MDA) and aromatic amines, wherein the aromatic amine may be m-XDA, which has an HDT temperature of 130-150°C and a high expansion coefficient. The catalyst may be an amine-based anionic catalyst, inorganic salt, inorganic base, including calcium chloride, lithium hydroxide, etc. It includes but not limited to the said materials.

## Claims

1. A method of preparing a high-strength carbon fiber composite bar with resin ribs on the surface, wherein the carbon fiber composite bar comprises carbon fibers and epoxy resin matrix, and has continuous spiral epoxy resin ribs on the surface of the said matrix,
the method comprising the following steps:
Step 1, drawing a plurality of carbon fiber bundles from a creel, adjusting the number of carbon fiber bundles as needed according to the diameter of the bar; through the number of fiber bundles, controlling a volume content of the carbon fibers in the bar blank to be in a range of 70%-78%, adjusting a drawing speed in a range of 300 mm/min - 600 mm/min, controlling a tension with a tension controller, adjusting the tension in a range of 5.88 N - 9.80 N;
Step 2, pulling the carbon fiber bundles into an epoxy resin tank so that the carbon fiber bundles are impregnated with the epoxy resin; after moving out of the epoxy resin tank, putting into a preformed mold to obtain a bar blank with a predetermined diameter, wherein an inner diameter of the preformed mold is in a range of 2 mm - 10 mm;
Step 3, when pulling the bar blank forward, winding a nylon belt on the bar blank, controlling the winding tension to ensure that the nylon belt is attached to the surface of the bar blank but not tightening the bar blank, the orientation of the carbon fiber bundles on the surface of the bar blank remains straight, the width of the nylon belt is 2 mm - 4 mm, and the thickness thereof is 0.5 mm - 1 mm;
Step 4, pulling the bar blank with the nylon belt on the surface through 5 ovens successively, wherein the temperatures of the 5 ovens are set to be 150°C, 150°C, 160°C, 180°C, 180°C; after heated by the first oven, the epoxy resin inside the bar blank expands and has a good fluidity, starts to overflow from the inside of the bar blank and gradually fills up the gaps of the nylon belt; after treatment in the second oven, the epoxy resin gels; after treatment in the third oven, the epoxy resin is pre-cured; after the last two ovens, a post-curing process is completed;
Step 5, after the curing is completed, unwinding the nylon belt from the surface of the bar, then spiral resin ribs are formed by the epoxy resin overflowing in the gaps of the nylon belt, and spiral grooves are formed at the unwinding part of the nylon belt.
Step 6, winding the produced bars with resin ribs on a take-up machine after being pulled by a puller.

2. The method of Claim 1, wherein the epoxy resin in Step 2 comprises a resin matrix, a curing agent and a catalyst, with a mass ratio of 1000:860:13.6.

## Patentansprüche

1. Verfahren zur Herstellung einer hochfesten Kohlefaserverbundleiste mit Harzrippen auf der Oberfläche, wobei die Kohlefaserverbundleiste Kohlefasern und eine Epoxidharzmatrix umfasst und auf der Oberfläche der Matrix durchgehende spiralförmige Epoxidharzrippen aufweist,
wobei das Verfahren folgende Schritte umfasst:
Schritt 1, Ziehen einer Vielzahl von Kohlefaserbündeln von einem Spulengatter, Anpassen der Anzahl der Kohlefaserbündel nach Bedarf entsprechend dem Durchmesser der Leiste; Steuern eines Volumengehalts der Kohlefasern im Leistenrohling über die Anzahl der Faserbündel auf einen Bereich von 70 % bis 78 %, Anpassen einer Ziehgeschwindigkeit in einem Bereich von 300 mm/min bis 600 mm/min, Steuern einer Spannung mit einem Spannungsregler, Anpassen der Spannung in einem Bereich von 5,88 N bis 9,80 N;
Schritt 2, Ziehen der Kohlefaserbündel in einen Epoxidharzbehälter, sodass die Kohlefaserbündel mit dem Epoxidharz imprägniert werden; nach dem Herausnehmen aus dem Epoxidharzbehälter Einlegen in eine vorgefertigte Form, um einen Leistenrohling mit einem vorgegebenen Durchmesser zu erhalten, wobei ein Innendurchmesser der vorgefertigten Form in einem Bereich von 2 mm bis 10 mm liegt;
Schritt 3, beim Vorwärtsziehen des Leistenrohlings Wickeln eines Nylonbandes um den Leistenrohling, Steuern der Wickelspannung, um sicherzustellen, dass das Nylonband an der Oberfläche des Leistenrohlings befestigt ist, der Leistenrohling jedoch nicht festgezogen wird, die Ausrichtung der Kohlefaserbündel auf der Oberfläche des Leistenrohlings gerade bleibt, die Breite des Nylonbandes 2 mm bis 4 mm beträgt und seine Dicke 0,5 mm bis 1 mm beträgt;
Schritt 4, Ziehen des Leistenrohlings mit dem Nylonband auf der Oberfläche nacheinander durch 5 Öfen, wobei die Temperaturen der 5 Öfen auf 150 °C, 150 °C, 160 °C, 180 °C, 180 °C eingestellt sind; nach dem Erwärmen im ersten Ofen dehnt sich das Epoxidharz im Inneren des Leistenrohlings aus und weist eine gute Fließfähigkeit auf, beginnt aus dem Inneren des Leistenrohlings herauszufließen und füllt nach und nach die Lücken des Nylonbands auf; nach der Behandlung im zweiten Ofen geliert das Epoxidharz; nach der Behandlung im dritten Ofen ist das Epoxidharz vorgehärtet; nach den letzten beiden Öfen ist ein Nachhärtungsprozess abgeschlossen;
Schritt 5, nach Abschluss des Aushärtens Abwickeln des Nylonbandes von der Oberfläche der Leiste, anschließend bilden sich durch das in die Lücken des Nylonbandes überlaufende Epoxidharz spiralförmige Harzrippen und am Abwickelteil des Nylonbandes bilden sich spiralförmige Rillen
Schritt 6, Wickeln der produzierten Leisten mit Harzrippen auf einer Aufwickelmaschine, nachdem sie von einem Abzieher gezogen wurden.

2. Verfahren nach Anspruch 1, wobei das Epoxidharz in Schritt 2 eine Harzmatrix, ein Härtungsmittel und einen Katalysator mit einem Massenverhältnis von 1000:860:13,6 umfasst.

## Revendications

1. Procédé de préparation d'une barre composite en fibres de carbone à résistance élevée dotée de nervures en résine sur la surface, ladite barre composite en fibre de carbone comprenant des fibres de carbone et une matrice de résine époxyde, et comportant des nervures en résine époxyde hélicoïdales continues sur la surface de ladite matrice,
le procédé comprenant les étapes suivantes :
Étape 1, l'étirage d'une pluralité de faisceaux de fibres de carbone à partir d'un cantre, l'ajustement du nombre de faisceaux de fibres de carbone selon les besoins en fonction du diamètre de la barre ; par l'intermédiaire du nombre de faisceaux de fibres, le contrôle de la teneur en volume des fibres de carbone dans l'ébauche de barre pour qu'elle se trouve dans la plage de 70 % à 78 %, l'ajustement de la vitesse d'étirage dans la plage de 300 mm/min à 600 mm/min, le contrôle de la tension avec un dispositif de contrôle de tension, l'ajustement de la tension dans la plage de 5,88 N à 9,80 N ;
Étape 2, le tirage des faisceaux de fibres de carbone dans un réservoir de résine époxyde de sorte que les faisceaux de fibres de carbone soient imprégnés de résine époxyde ; après les avoir sortis du réservoir de résine époxyde, leur placement dans un moule préformé pour obtenir une ébauche de barre avec un diamètre prédéfini, le diamètre interne du moule préformé se trouvant dans la plage de 2 mm à 10 mm ;
Étape 3, lors du tirage de l'ébauche de barre vers l'avant, l'enroulement d'une bande de nylon sur l'ébauche de barre, le contrôle de la tension d'enroulement pour garantir que la bande de nylon soit fixée à la surface de l'ébauche de barre mais ne serre pas l'ébauche de barre, l'orientation des faisceaux de fibres de carbone à la surface de l'ébauche de barre reste droite, la largeur de la bande de nylon est de 2 mm à 4 mm et son épaisseur est de 0,5 mm à 1 mm ;
Étape 4, le tirage de l'ébauche de barre avec la bande de nylon à la surface à travers 5 fours successivement, les températures des 5 fours étant réglées à 150°C, 150°C, 160°C, 180°C, 180°C ; après avoir été chauffée par le premier four, la résine époxyde à l'intérieur de l'ébauche de barre se dilate et comporte une bonne fluidité, commence à déborder de l'intérieur de l'ébauche de barre et remplit progressivement les interstices de la bande de nylon ; après traitement dans le deuxième four, la résine époxyde se gélifie ; après traitement dans le troisième four, la résine époxyde est pré-durcie ; après les deux derniers fours, le processus de post-durcissement est terminé ;
Étape 5, une fois le durcissement terminé, le déroulement de la bande de nylon de la surface de la barre, puis des nervures en résine hélicoïdales sont formées par la résine époxyde débordant dans les interstices de la bande de nylon, et des rainures hélicoïdales sont formées au niveau de la partie de déroulement de la bande de nylon.
Étape 6, l'enroulement des barres produites avec des nervures en résine sur une machine d'enroulement après avoir été tirées par un dispositif de tirage.

2. Procédé selon la revendication 1, ladite résine époxyde à l'étape 2 comprenant une matrice de résine, un agent de durcissement et un catalyseur, avec un rapport massique de 1000:860:13,6.
